(19) Europäisches Patentamt
European Patent Office
Office européen des brevets

(11) Publication number: **0 003 240**
**B1**

(12) **EUROPEAN PATENT SPECIFICATION**

(45) Date of publication of patent specification: **21.07.82**

(51) Int. Cl.³: **C 08 J 3/10, C 09 D 3/74, C 25 D 13/06**

(21) Application number: **78101854.4**

(22) Date of filing: **27.12.78**

(54) **Emulsions of vinyl resins and their use in coating compositions.**

(30) Priority: **28.12.77 US 865126**

(43) Date of publication of application:
**08.08.79 Bulletin 79/16**

(45) Publication of the grant of the patent:
**21.07.82 Bulletin 82/29**

(84) Designated Contracting States:
**BE DE FR GB NL SE**

(56) References cited:
**FR - A - 1 514 524**
**US - A - 3 798 194**

(73) Proprietor: **UNION CARBIDE CORPORATION**
**Old Ridgebury Road**
**Danbury Connecticut 06817 (US)**

(72) Inventor: **Fan, You-Ling**
**3 Heritage Court**
**East Brunswick New Jersey (US)**

(74) Representative: **Weinhold, Peter, Dr. et al,**
**Siegfriedstrasse 8**
**D-8000 München 40 (DE)**

**EP 0 003 240 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Emulsions of vinyl resins and their use in coating compositions

## Background of the Invention

This invention pertains to the preparation of stable aqueous microemulsions of carboxylic acid or sulfonic acid containing vinyl resins in a solvent/co-solvent mixture by converting said vinyl resins to ionomers.

U.S. 3,798,194 teaches the preparation of colloidal dispersions of various organic polymers containing carboxylic acid groups by digesting them with an aqueous medium containing n-butanol or n-pentanol and a base as basic as ammonia. Contrary to the present invention the organic polymers described therein do not include vinyl chloride polymers. Furthermore there is no suggestion of using a mixture of an organic water-miscible solvent which has an affinity for the vinyl resins and a boiling point below about 160°C and an organic, water-miscible co-solvent which is a poor solvent for said resins but is miscible with the organic solvent and has a boiling point above that of the organic solvent and water. The reference also shows no appreciation of the use of organic polymers containing sulfonic acid groups.

Vinyl resin lacquers are old in the art and have enjoyed commercial success for coating various substrates with clear vinyl coatings. The coating operation however, involves the removal of large quantities of organic solvents in which the vinyl resins are dissolved. For ecological and anti-pollution considerations solvent based coatings are undesirable. This has led to consideration of water-borne resin systems for coating applications. It has not been found feasible to simply substitute a water-borne system for the vinyl resin lacquers for several reasons. While one may make vinyl resin latexes by emulsion polymerization these polymerization techniques require the presence of components in the polymerization recipe which have a deleterious effect on the final coating. This is particularly true in can coatings where such criteria as blush resistance and water resistance, particularly at pasteurization temperature is required. The presence of surfactants required to maintain stable emulsions increases the susceptibility of resin coatings on substrates to break down in contact with water.

It is therefore an object of this invention to afford a water-borne vinyl resin which is free of surfactants.

## Summary of the invention

It has now been found that water-borne vinyl resin systems meeting the objects of this invention are provided by stable aqueous microemulsions of vinyl resins being copolymers of vinyl chloride and/or vinylidene chloride and having an average particle size of 0.02 to 0.14 microns prepared by vigorously blending vinyl resins having carboxylic or sulfonic acid groups therein with a water miscible base, at least one organic, water-miscible solvent which has an infinity for said resins and a boiling point below 160°C, and an organic, water-miscible co-solvent which is a poor solvent for said resins but is miscible with the organic solvents and has a boiling point above that of the organic solvents.

It is preferred to prepare these microemulsions by blending:

(A) a normally solid vinyl resin containing carboxylic or sulfonic acid groups and having the following moieties copolymerized therein

(1) 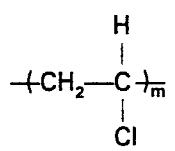

(2) 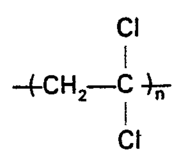

(3) 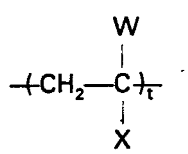

(4) 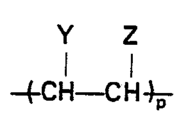

(5) 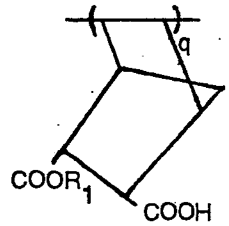

wherein m and n are percentages each having a value of 0—99%;

t is a percentage having a value of 0—59%;

p is a percentage having a value of 1—30%, when q = 0;

q is a percentage having a value of 1—30%, when p = 0; with the proviso that m+n+t is ≥ 70 and ≥ 99%, that m+n+t+p+q = 100%, that when m = 0, n is at least 1 and that when n = 0, m is at least 1; wherein X is a monovalent radical selected from H and lower alkyls having 1—4 carbons;

W is a monovalent radical selected from —H, lower alkyls, aryl having 6 to 9 carbons,

$$-\overset{O}{\overset{\|}{C}}-OR,\ -O-\overset{O}{\overset{\|}{C}}-R,\ -\overset{O}{\overset{\|}{C}}-O-(CH_2)_a-OH\ ,$$

wherein a is an integer having values of 1—3,

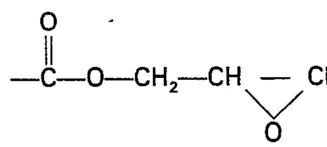 —OR

wherein R is a $C_1$— $C_{18}$-alkyl, —OH,

$$-\overset{O}{\overset{\|}{C}}-N(R_2)_2$$

wherein $R_2$ is a monovalent radical selected from —H, methyl or ethyl, and —CN;

Y is a monovalent radical selected from —H, methyl,

$$-(CH_2)_b-\overset{O}{\overset{\|}{C}}-OR,\ \text{or}$$

$$-(CH_2)_b-\overset{O}{\overset{\|}{C}}-OH,$$

wherein b is an integer having values of 0—4;

and R is a $C_1$—$C_{18}$-alkyl, —OH,

$$-\overset{O}{\overset{\|}{C}}-N(R_2)_2$$

wherein $R_2$ is a monovalent radical selected from —H, methyl or ethyl;

Z is a monovalent radical selected from

$$-(CH_2)_b-\overset{O}{\overset{\|}{C}}-OH,\ -SO_3H \text{ and } -C_6H_4-SO_3H;\ \text{and}$$

$R_1$ is a monovalent radical selected from —H, methyl or ethyl;

with the proviso that Y and Z are never —COOH and —$SO_3H$ at the same time,

(B) sufficient water-miscible base to neutralize 10% to 100% of said carboxylic or sulfonic acid groups,

(C) 1 to 200 parts, per 100 parts by weight of vinyl resin of a water-miscible normally liquid solvent for said vinyl resin having a boiling point of up to 160°C, selected from lower aliphatic ketones, esters or ethers having 3 to 6 carbon atoms and cycloaliphatic ketones or ethers having 4 to 6 carbon atoms;

(D) 1 to 200 parts, per 100 parts by weight of vinyl resin, of a normally liquid co-solvent which is miscible with water and solvent (C), having a boiling point greater than that of solvent (C) and water, selected from

(1) glycol monoalkyl ethers having the formula:

$$HO-(CHR''CHR'''O)_r-R''''$$

where each of R'', R''' is H or $CH_3$, r is an integer having values of 1 to 3 and R'''' is an alkyl group having 1 to 6 carbon atoms;

(2) aliphatic acidic ethers having the formula:

$$R'''''O-(CH_2)_r-COOH$$

wherein R''''' is an alkyl group having 1 to 4 carbon atoms and r has the meaning stated above;

(3) amino esters having the formula:

$$R'''''-\overset{\overset{O}{\|}}{C}-O-(CH_2)_r-NH_2,$$

R''''' and r having the meaning stated above;

(4) amino ketones having the formula:

$$R'''''-\overset{\overset{O}{\|}}{C}(CH_2)_r-NH_2,$$

R''''' and r having the meaning stated above;

(5) aliphatic alcohols having the formula:
$R_2OH$, where $R_2$ is alkyl having 1 to 5 carbons;

(6) aliphatic carboxylic acids having the formula:

$$R_3\overset{\overset{O}{\|}}{C}OH,$$

where $R_3$ is H or alkyl having 1 to 4 carbons;

(7) aliphatic amines having the formula:

$$R_4-\underset{\underset{R_6}{|}}{N}-R_5$$

where $R_4$ and $R_5$ are H or alkyl having 1 to 6 carbons and $R_6$ is alkyl having 1 to 6 carbons, with the proviso that the total number of carbons in the sum of $R_4 + R_5 + R_6 \leq 6$;

(8) aliphatic amino ethers having the formula:

$$-[R_7O-(CH_2)_g]_r-$$

where $R_7$ is methyl or ethyl, g has values of 1—4 and r has the meaning stated above;

(9) aliphatic dialkyl amides having the formula:

$$R_8CON(R_7)_2$$

where $R_8$ is H or alkyl having 1 to 5 carbons, and $R_7$ has the meaning stated above;

(10) N-(Hydroxymethyl)acrylamide and N-(hydroxymethyl)methacrylamide

(11) cycloaliphatic ether alcohols having the formula:

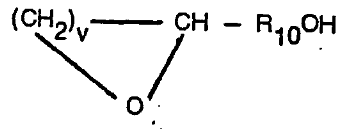

where $R_{10}$ is alkylene having 1 to 3 carbons and v is an integer having values of 1 to 5;

(12) hydroxy esters having the formula:

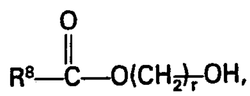

$R_8$ and r have the meaning stated above; and

(13) hydroxy ketones having the formula:

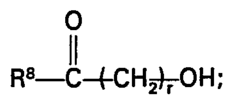

$R_8$ and r have the meaning stated above; and

(E) sufficient water to provide an aqueous microemulsion having a total solids content of up to 60% by weight.

The vinyl resins useful in this invention are copolymers of vinyl chloride, vinylidene chloride or both copolymerized with a vinyl comonomer containing at least one carboxylic acid group, —COOH or sulfonic acid group —$SO_3H$. Exemplary resins include copolymers of vinyl chloride and acrylic or methacrylic acid, vinyl chloride and maleic acid, or vinyl chloride and styrene sulfonic acid, copolymers of vinylidene chloride and acrylic or methycrylic acid, vinylidene chloride and maleic acid, or vinylidene chloride and styrene sulfonic acid.

These vinyl resins also encompass three component copolymers containing for example the following monomers copolymerized therein:

vinyl chloride/vinyl acetate/acrylic acid
vinyl chloride/vinyl acetate/maleic acid
vinyl chloride/vinyl acetate/crotonic acid
vinyl chloride/vinyl acetate/5-norbornene-2,3-di-carboxylic acid, monobutyl ester
vinyl chloride/vinyl acetate/fumaric acid
vinyl chloride/methyl methacrylate/maleic acid
vinyl chloride/acrylonitrile/maleic acid
vinyl chloride/styrene/maleic acid
vinyl chloride/2-propenyl acetate/maleic acid
vinyl chloride/hydroxypropylacrylate/maleic acid
vinyl chloride/glycidyl methacrylate/maleic acid
vinyl chloride/acrylamide/maleic acid
vinyl chloride/vinyl alcohol/maleic acid
vinyl chloride/vinyl butyl ether/maleic acid
vinyl chloride/ethyl acrylate/maleic acid
vinyl chloride/ethylene/maleic acid
vinyl chloride/ethylene/acrylic acid
vinyl chloride/propylene/maleic acid
vinyl chloride/styrene/acrylic acid
vinyl chloride/vinyl acetate/styrene sulfonic acid
vinyl chloride/vinyl acetate/glycidyl acrylate
vinyl chloride/vinyl acetate/glycidyl methacrylate
vinyl chloride/vinyl acetate/hydroxy-$C_2$—$C_3$-alkyl acrylate
vinyl chloride/vinyl acetate/hydroxy-$C_2$—$C_3$-alkyl methacrylate
vinyl chloride/vinyl stearate/maleic acid
vinyl chloride/vinyl acetate/vinyl alcohol
vinyl chloride/vinyl acetate/vinyl sulfonic acid

and the like as well as other terpolymers in which Vinylidene chloride is substituted for vinyl chloride in this list.

Furthermore, a terpolymer of vinyl chloride, vinylidene chloride and an ethylenically unsaturated

carboxylic acid, preferably maleic acid or fumaric acid or acrylic acid or methacrylic acid can be used.

In addition four component quadripolymers can also be used wherein both vinyl chloride and vinylidene chloride are copolymerized with the other copolymers shown in the terpolymers in the preceding paragraph.

The amount of each monomer copolymerized in the vinyl resins is not narrowly critical.

The ethylenically unsaturated carboxylic acids enumerated above as well as the other comonomers are commercially available. The more common sulfonic acid containing monomers are also commerically available or can be synthesized by sulfonation of ethylenically unsaturated monomers ranging from aliphatic monomers, such as, ethylene to aromatic monomers, such as, styrene, with known sulfonation agents, such as, listed in "Unit Processes in Organic Synthesis" by P. H. Groggins, McGraw-Hill Co., Inc., page 262 NYC (1947).

The invention is not limited to single copolymers and so various combinations of two or more of these vinyl resins can be emulsified as well.

According to a special embodiment the vinyl resin contains 75 to 99 weight % vinyl chloride and 1 to 25 acrylic or methacrylic acid copolymerized therein.

Preferred vinyl chloride resins include vinyl chloride terpolymers having 60 to 91 weight % vinyl chloride, 10 to 25 weight % vinyl acetate and 1 to 15 weight % of carboxyl-containing ethylenically unsaturated hydrocarbon, preferably maleic acid, fumaric acid or crotonic acid copolymerized therein. Such polymers may be obtained commercially or may be synthesized by a free radical initiated polymerization of vinyl chloride, vinyl acetate and maleic acid, or maleic anhydride, fumaric acid or crotonic acid.

The above-described vinyl chloride resins can also be blended with vinyl chloride/vinyl acetate terpolymers containing glycidyl or hydroxyalkyl acrylates or methacrylates having 2 or 3 carbons in the alkyl group to afford crosslinked coatings. One can also add thermosetting resins, such as, epoxy resins urea resins and melamine resins to obtain a higher degree of cross-linking. Preferred epoxy resins include liquid and solid diglycidyl ethers of bisphenol A which are commercially available and described in "Epoxy Resins" by H. Lee and K. Neville, McGraw-Hill and Co., Inc. NYC 1957.

Preferred melamine resins are the hexamethoxymethylmelamine resins. Preferred urea resins are the methylated urea-formaldehyde resins. These are commercially available.

Blush or whitening of the coatings is determined subjectively, a test well known to those skilled in the art.

Cross-hatch adhesive failure determinations are made scratching a cross on the coated substrates with a sharp pointed instrument, pressing sections of Scotch® tape across the scratched portions and then ripping the Scotch tape away from the coated surface. Failures are indicated by the amount of coating which pulls away from the substrate.

It is a unique feature of the microemulsions described herein that very thin continuous protective films can be laid on both metallic and non-metallic substrates. The resultant films are pin-hole free, blush resistant and adhere tenaciously to the substrates. It is unexpected that these film properties are provided without the necessity of utilizing leveling aids or plasticizers.

While it is not necessary if viscosity adjustments of the microemulsions is desired minor amounts, i.e. up to 8% of the weight of vinyl resins, of thickening agents can also be included in the composition used to emulsify the vinyl resins. Suitable thickening agents include such water-soluble resins as, hydrolyzed polyvinyl acetates or polyvinyl alcohol, water-soluble cellulose derivatives, e.g., hydroxyethyl cellulose, polyethylene glycols, acrylic or methacrylic acid polymers, poly($\varepsilon$-caprolactone), polyvinyl pyrrolidone, and poly(methylvinyl ether).

Other additives known to those skilled in the art can also be incorporated into the microemulsions if desired. These include dyes, pigments, fillers, antioxidants, ultraviolet stabilizers, and heat stabilizers.

For the purposes of this invention the term "water-miscible base" is used in the broad sense of any proton acceptor which will neutralize the acid functionalities in the vinyl resin, i.e. —COOH or $SO_3H$ groups and whose solubility is at least 1 g. per 100 cc of water. Exemplary bases which may be organic or inorganic, include alkali metal or alkaline earth hydroxides, such as, sodium hydroxide, potassium hydroxide, lithium hydroxide, magnesium hydroxide, calcium hydroxide, strontium hydroxide, or barium hydroxide, and ammonium hydroxide; organic amines including monoalkylamines, alkenediamines, alkanolamines, aromatic amines, cyclic amines, or alkaryl amines. For economic reasons and ready availability alkali metal, alkaline earth and ammonium hydroxides are preferred inorganic bases. In coating application it is preferred to use volatile bases which are fugitive and consequently reversible ionomers are formed. For example, ammonium hydroxide or lower molecular weight alkylamines form ionomers which afford coatings wherein the ionomer moieties revert to acid and from which the base, being fugitive, is removed. This enhances blush resistance and minimize color formation upon exposure of the final coating to the elements. Particularly preferred alkylamines include monomethyl amine, dimethyl amine, trimethyl amine, and triethyl amine.

In general, preferred alkyl amines have the formula:

$$R_a—N—R_c$$
$$|$$
$$R_b$$

wherein each of $R_a$, $R_b$ and $R_c$ is H or a $C_1$—$C_6$ alkyl with the proviso that $R_a + R_b + R_c \leq 6$ carbons.

Preferred alkylene diamines have the formula:

$$H_2N(D)_xNH_2$$

where x = 1—8 and D is alkylene radical.

Preferred alkanolamines include mono-, di-, and tri-ethanolamine, N-methyl ethanolamine, N,N-dimethylethanolamine, N,N-diethyl ethanolamine, N-aminoethylethanolamine, and N-methyl diethanolamine.

Preferred cyclic amines include morpholine, N-methyl morpholine, piperidine, pyrrolidine, piperazine, N-methyl piperazine, N-(2-hydroxyethyl)piperazine, N-aminoethyl piperazine, 2,5-dimethyl piperazine, and hexamethylene tetramine.

Preferred lower aliphatic ketone solvents include acetone, methyl ethyl ketone (MEK), diethyl ketone, methyl n-propyl ketone, methyl isopropyl ketone, acetyl acetone, and 1-methoxy-2-propane.

Preferred lower aliphatic ester solvents include methyl formate, ethyl formate, methyl acetate, ethyl acetate, and isopropyl acetate.

Preferred lower aliphatic ether solvents include diethyl ether, ethyl propyl ether, and di-n-propyl ether.

Preferred cycloaliphatic ketones solvents include cyclobutanone, cyclopentanone, and cyclohexanone.

Preferred cycloaliphatic ether solvents include, dioxane, and tetrahydrofuran.

Depending on the particular vinyl resin used it may be preferable to use mixtures of these solvents rather than a single solvent. For example, with a vinyl chloride/vinyl acetate/maleic acid terpolymer the combination of acetone with another ketone, such as, methyl ethyl ketone will give microemulsions superior to those formulated with acetone alone.

Exemplary co-solvents are presented below.

Representative glycol monoalkyl ethers are monomethyl, ethyl, propyl, butyl ethers of ethylene glycol, diethylene glycol, triethylene glycol, propylene glycol, dipropylene glycol, and phenyl glycol ether.

Representative aliphatic acidic ethers include ethoxyacetic acid, $\alpha$-methoxy-propionic acid, dimethoxy acetic acid, and ethoxy propionic acid.

Representative amino esters include methyl $\beta$-aminopropionate, ethyl aminoacetate, and ethyl aminopropionate.

Representative amino ketones include aminoacetone, and 2-aminobutanone.

Representative aliphatic alcohols include, methanol, ethanol, propanols, butanols, and pentanols.

Representative aliphatic carboxylic acids include formic, acetic, propionic, and butyric.

Representative aliphatic amines include methylamine, dimethylamine, methyl-ethylamine, dimethylamine, triethylamine, n-butylamine, and hexylamine.

Representative aliphatic amino ethers include $\gamma$-methoxy-n-propylamine, $\gamma$-ethoxy-n-propylamine, $\beta$-methoxy-isobutylamine, and $\beta$-ethoxy-n-butylamine.

Representative aliphatic dialkyl amides include N,N-dimethylformamide, N,N-diethylformamide, and N,N-dimethyl-acetamide.

Representative cycloaliphatic ether alcohols include glycidol, and tetrahydrofurfuryl alcohol.

Representative hydroxy esters include methyl lactate, methyl-$\beta$-hydroxypropionate, and ethyl-$\beta$-hydroxypropionate.

Representative hydroxy ketones include 1-hydroxy-2-propanone, 1-hydroxy-3-butanone, 3-methyl-4-hydroxy-2-butanone, 1-hydroxy-2-pentanone, and 4-hydroxy-2-pentanone.

The order of addition of the components used to prepare these microemulsions is not critical. Thus for example one may first make a varnish of the vinyl resin with the solvent and co-solvent, followed by conversion to an ionomer with base and then emulsification with water. The water can be added to the varnish or vice versa. One may also make these microemulsions from dry vinyl resin rather than a varnish thereof, by adding pulverised resin pellets to a mixture of solvent, co-solvent, base and water.

The degree of neutralization of the acid moieties in the vinyl resin components can as pointed out above vary over a wide range, i.e., from 10% to 100%. The optimum degree of neutralization depends upon the amount of acid moiety in the vinyl resin. Thus for example a vinyl resin containing a low amount of acid moiety, e.g., 2 or 3 weight % should be neutralized with base to a much greater extent than a vinyl resin containing a large amount of acid moieties. This is believed to be due to the higher polarity of the higher acid moiety containing vinyl resins.

No special equipment is needed to effect emulsification other than agitation or mixing equipnment known to those skilled in the art.

While not wishing to be bound by any theoretical explanation, it is believed that the formulation of the microemulsion of this invention is achieved without the necessity of employing surfactants by the use of a combination of:

(A) an organic solvent which

(i) is water-miscible, i.e., at least 1% and preferably 10% water is soluble in said solvent on a weight basis;

(ii) has an affinity for the vinyl resin used, i.e., the solvent/resin interaction is greater than the resin/resin interaction;

(iii) has a boiling point below 160°C.,

(B) an organic co-solvent which:

(i) is as water-miscible as the solvent in (A);

(ii) is a poor solvent for the vinyl resin used, i.e., the co-solvent/resin interaction is $\leq$ the resin/resin interaction;

(iii) has a boiling point greater than the above-mentioned solvent and water; and

(C) a vinyl resin containing an ionomer functionality copolymerized therein.

The above-described combination of solvent and co-solvent surprisingly lowers the interfacial tension between the vinyl resin and the aqueous phase while avoiding coagulation. This affords the formation of a microemulsion where the micelles are stabilized by the ionomer repulsion of the ionomer moiety and the surfactant-like property of the co-solvent. When this stage is reached it is no longer necessary to have the solvent present and concentration of microemulsion can be effected to afford a higher solids content. In the application of these microemulsions to a substrate to form a coating the co-solvent also can be removed from the system with the water leaving only the vinyl resin to constitute the coating. In the case of vinyl resins neutralized with a volatile base, the ionomer in the vinyl resin reverts to the original free acid moiety.

The invention is further described in the Examples which follow. All parts and percentages are by weight unless otherwise specified.

Example 1

Preparation of sodium ionomer microemulsion

To a varnish composed of 56 g. of Bakelite® VMCA vinyl resin (a terpolymer containing 81% vinyl chloride, 17% vinyl acetate and 2% maleic acid copolymerized therein), 65.3 g. of each of butyl Cellosolve (a trademark of Union Carbide Corporation for the monobutyl ether of ethylene glycol), and 65.3 g. of methyl ethyl ketone (MEK), was added with vigorous stirring 258 g. of an aqueous solution containing 0.7725 g. of sodium hydroxide. Mixing was carried out in a high-speed Waring Blender for 10 minutes. An aqueous emulsion of ionomer, that is, VMCA terpolymer neutralized with base to contain sodium maleate moieties rather than maleic acid moieties, was obtained which was uniform and translucent. The Brookfield viscosity of this emulsion was 21 mPa s (centipoise). The pH was 7.8 at 25°C. The average size of the micelles measured by the scanning electron microscope technique, was found to be 0.04—0.05 $\mu$m. This is within the range of microemulsion particles as defined in "Advances in Colloid and Interface Science", *4*, pages 281—300 (1975). edited by K. Shinoda and S. Friberg.

Example 2

Preparation of ammonium ionomer microemulsion

The procedure described in Example 1 was repeated with the exception that 2.33 g. of 58% aqueous ammonium hydroxide solution was substituted for the sodium hydroxide. A translucent, uniform, microemulsion was obtained having a Brookfield viscosity of 24 mPas (centipoise).

Example 2a

Preparation of ammonium ionomer microemulsion

The procedure described in Example 2 was repeated with the exception that the 65.3 g. of MEK was replaced by an equal amount of methyl acetate. A translucent, uniform microemulsion was obtained having a Brookfield viscosity of 25.6 mPas (centipose) at 26°C.

Example 3

Concentration of ammonium ionomer microemulsion

The microemulsion prepared in Example 2 was stripped under vacuum at 45°C. using a Rinco® rotary evaporator. A total of 219.8 g. of Condensate was collected containing water, butyl Cellosolve and all of the MEK. The residual microemulsion remaining in the pot contained 28% of ionomer resin, 22% of butyl Cellosolve and 48% of water. The emulsion was uniform, very fluid and could be diluted with water or butyl Cellosolve without breaking the microemulsion.

Example 4

Preparation of trimethylamine ionomer microemulsion

The procedure used in Example 1 was repeated with the exception that, the vinyl resin was neutralized with 5.6 g. of a 25% trimethylamine solution in methanol. A uniform, translucent, ionomer microemulsion was obtained, which had a Brookfield viscosity of 17.6 mPas (centipoise) at 25.5°C.

Example 4a

Preparation of trimethylamine ionomer microemulsion

The procedure described in Example 4 was repeated with the exception that the MEK was replaced with an equivalent amount of a 1/1 weight ratio mixture of MEK/acetone. A uniform, translucent ionomer microemulsion was obtained having a Brookfield viscosity of 18 mPas (centipoise) at 26°C.

Example 4b

Preparation of trimethylamine ionomer microemulsion

Example 4 was repeated with the exception that the MEK was replaced by an equivalent amount of a 5/1 weight ratio mixture of MEK/methyl isobutyl ketone. A uniform, translucent, ionomer, microemulsion was obtained having a Brookfield viscosity of 20 mPas (centipoise) at 26°C.

Example 4c

Preparation of trimethylamine ionomer microemulsion

Example 4 was repeated with the exception that the MEK was replaced by an equivalent amount of a tetrahydrofuran. A uniform, translucent ionomer, microemulsion was obtained having a Brookfield viscosity of 20 mPas (centipoise) at 26°C.

Example 4d

Preparation of trimethylamine ionomer microemulsion

Example 4 was repeated with the exception that the MEK was replaced with an equivalent amount of cyclohexanone. A milky, uniform, ionomer microemulsion was obtained.

Example 4e

Preparation of trimethylamine ionomer microemulsion

Example 4 was repeated with the exception that the MEK was replaced by an equivalent amount of diethyl ketone. A milky, uniform, ionomer microemulsion was obtained.

Example 4f

Preparation of trimethylamine ionomer microemulsion

Example 4 was repeated with the exception that the butyl Cellosolve was replaced by an equivalent amount of 1-butoxyethoxy-2-propanol. A uniform, translucent ionomer microemulsion was obtained having a Brookfield viscosity of 18 mPas (centipoise) at 25°C.

Example 4g

Preparation of trimethylamine ionomer microemulsion

Example 4 was repeated with the exception that the butyl Cellosolve was replaced by an equivalent amount of n-butanol. A uniform, translucent, ionomer microemulsion was obtained having a Brookfield viscosity of 16 mPas (centipoise) at 25°C.

Example 4h

Preparation of trimethylamine ionomer microemulsion

Example 4 was repeated with the exception that the butyl Cellosolve was replaced by an equivalent amount of ethoxy triglycol. A uniform, milky, ionomer microemulsion was obtained having a Brookfield viscosity of 21 mPas (centipoise) at 26°C.

Example 4i

Preparation of trimethylamine ionomer microemulsion

Example 4 was repeated with the exception that the butyl Cellosolve was replaced by an equivalent amount of butyl Carbitol (a tradename of Union Carbide Corporation for the monobutyl ether of diethylene glycol). A uniform, slightly translucent, ionomer, microemulsion was obtained having a Brookfield viscosity of 16 mPas (centipoise) at 23.5°C. and a pH of 7.4.

Example 4j

Preparation of trimethylamine ionomer microemulsion

Example 4 was repeated with the exception that the butyl Cellosolve was replaced by an equivalent amount of Propasol Solvent A (a tradename of Union Carbide Corporation for 1-propoxyethoxy-2-ethanol). A uniform, slightly translucent, ionomer microemulsion was obtained having a

Brookfield viscosity of 18 mPas (centipoise) at 25°C. and a pH of 7.55.

Example 4k

Preparation of trimethylamine ionomer microemulsion

Example 4 was repeated with the exception that the butyl Cellosolve was replaced with an equivalent amount of glycidol (2,3-epoxy-1-propanol). A uniform, milky ionomer microemulsion was obtained having a Brookfield viscosity of 21 mPas (centipoise) at 26°C.

Example 5

Preparation of sodium ionomer microemulsion

The procedure used in Example 1 was repeated with the exception that the co-solvent employed was butyl Carbitol (trademark of Union Carbide Corporation for the monobutyl ether of diethylene glycol) instead of butyl Cellosolve. A uniform, translucent ionomer microemulsion was obtained, which had a Brookfield viscosity of 16.8 mPas (centipoise) at 23.5°C. and a pH of 7.4.

Example 6

Preparation of sodium ionomer microemulsion

Example 1 was repeated with the exception that the co-solvent was Propasol Solvent P (tradename of Union Carbide Corporation for $C_4H_9OCH_2CH(CH_3)OH$), instead of butyl Cellosolve. A uniform, translucent microemulsion was obtained which had a Brookfield viscosity of 20 mPas (centipoise) at ambient temperatures.

Example 7

Preparation of a 2-amino-2-methyl-1,3-propanediol ionomer microemulsion

The procedure described in Example 1 was repeated with the exception that 2.1 g. of 2-amino-2-methyl-1,3-propanediol was used in place of the sodium hydroxide. A uniform, translucent emulsion was obtained. The microemulsion had a Brookfield viscosity of 24 mPas (centipoise) and a pH of 7.4 at ambient temperatures.

Example 8

Preparation of sodium ionomer microemulsion

The procedure described in Example 2 was used with the exception that Bakelite VMCC vinyl resin (a terpolymer containing 83% vinyl chloride, 16% vinyl acetate, and 1% maleic acid copolymerized therein) was used in place of the VMCA vinyl resin. A uniform, translucent microemulsion was obtained having a Brookfield viscosity of 20 mPas (centipoise) at ambient temperatures.

The microemulsion described in Examples 1—8 can be deposited on various substrates and evaporated to provide continuous coatings thereon. In the case of Examples 1, 5, 6 and 8 the coatings are continuous films of sodium ionomer. In the case of Examples 2, 3, 4, 7 and 8, the coatings are continuous films of terpolymers containing free carboxyl groups rather than ionomers.

Example 9

Preparation of mixed trimethylamine ionomer microemulsion

To a varnish composed of 37.33 g. of Bakelite VMCA vinyl resin 18.67 g. of Bakelite VERR vinyl resin (a terpolymer containing 80% vinyl chloride, 11% of vinyl acetate and 9% glycidyl methacrylate copolymerized therein having a number average molecular weight of about 8370), 65.3 g. of butyl Cellosolve and 65.3 g. of MEK was added slowly an aqueous solution containing 3.73 g. of trimethylamine (as a 25% solution in methanol) and 258 g. of water. A uniform, milky microemulsion was obtained.

A 400 g. portion of this microemulsion was stripped under vacuum at 45°C. to an microemulsion weighing 190 g., corresponding to a resin solids content of 26.3%. The stripped microemulsion had a Brookfield viscosity of 22.4 mPas (centipoise) at 25°C. and a pH of 6.85.

Example 10

Evaluation of microemulsion from Example 9

The stripped microemulsion prepared in Example 9 was coated on various metallic substrates used in the industry for fabricating 2-piece cans. The microemulsion showed excellent wetting characteristics, good thermal stability during baking, good blush resistance, and smooth, glossy finishes. The type of substrate used, baking conditions and test results are shown in Table I with an epoxy resin control.

TABLE I

| SUBSTRATE | BAKE CYCLE | BLUSH | CROSS-HATCH ADHESIVE FAILURE, % |
|---|---|---|---|
| American Can Co. Budium[a] coated steel body can blanks | 4 min. at 365°F (185°C.) | Very Slight | 0 |
| Continental Can Co. Budium[a] coated tin-free steel body can blanks | 4 min. at 365°F (185°C.) | Very Slight | 0 |
| Alcoa 5182® cleaned only[c] | 4 min. at 350°F (177°C.) | Moderate | 0 |
| Alcoa 5182® converted[d] and cleaned[c] | 4 min. at 350°F (177°C.) | None | 0 |
| Electrically Coated Tin Plate[e] | 4 min. at 350°F (177°C.) | None | 0 |
| American Can Co. E-81 Epoxy[f] coated steel body can blanks | 4 min. at 320°F (160°C.) | None | 100 |

FOOTNOTES FOR TABLE I

(a) Budium is a Trademark of E.I. duPont de Nemours for a polybutadiene coating used on can liners.
(b) Alcoa 5182 is an aluminum-magnesium alloy sold by the Aluminum Co. of America.
(c) Cleaned with detergent to remove surface oil.
(d) Surface after cleaning converted to amorphous coating, such as, phosphate/chromate, or the like.
(e) Steel body blanks, for cans coated with tin and abbreviated as ETP.
(f) E-81 epoxy is a urea-formaldehyde resin/bisphenol A solid epoxy resin formulation.

In contrast to the above results except for E-81 epoxy coated steel, emulsions of the same terpolymers containing ionic or non-ionic surfactants as emulsion stabilizers when coated onto the same substrates in the same manner showed severe blush and/or adhesion failure.

Example 11

Preparation of mixed trimethylamine ionomer microemulsion

A stripped microemulsion of Bakelite VMCA and VERR was prepared as in Example 9 with the exception that the relative amounts vinyl resin used changed as shown in the following formulations:

INITIAL MICROEMULSION

| | |
|---|---|
| VMCA | 33.6 g. |
| VERR | 22.4 g. |
| Butyl Cellosolve | 65.3 g. |
| MEK | 65.3 g. |
| Trimethylamine (25% solution in methanol) | 3.36 g. |
| Water | 258 g. |

STRIPPED EMULSION

| | |
|---|---|
| VMCA/VERR (3/2) | 28.7% |
| Organic Components | 24.3% |
| Water | |

The stripped microemulsion was uniform and had a Brookfield viscosity of 33.6 mPas (centipoise) at 24.5°C.

Example 12

Evaluation of microemulsion from Example 11

The stripped vinyl resin microemulsion prepared in Example 11 was applied on typical substrates for fabricating 2-piece cans. The levels of performance of the resulting can coatings were compared with those obtained by the application of the same vinyl resins from organic solvents. The results are delineated in Tables II and III respectively.

TABLE II

| SUBSTRATE | BAKE CYCLE | BLUSH | CROSS-HATCH ADHESIVE FAILURE, % |
|---|---|---|---|
| American Can Co., Budium coated steel body blanks for can | 4 min. at 320°F (160°C.) | None | 0 |
| Continental Can Co. Budium coated tin-free steel body blanks for cans | 4 min. at 320°F (160°C.) | None | 0 |
| Alcoa 5182 cleaned only | 4 min. at 350°F (177°C.) | Moderate | 0 |
| Alcoa 5182 converted and cleaned | 4 min. at 350°F (177°C.) | None | 0 |
| Electrically coated tin plate (ETP) | 4 min. at 350°F (177°C.) | None | 0 |
| American Can Co. coated with E-81 Epoxy coated steel body can blanks | 4 min. at 320°F (160°C.) | None | 100 |

TABLE III[1]

| SUBSTRATE | BAKE CYCLE | BLUSH | CROSS-HATCH ADHESIVE FAILURE, % |
|---|---|---|---|
| American Can Co. Budium coated steel can blanks | 4 min. at 320°F (160°C.) | None | 0 |
| Continental Can Co. Budium coated steel can blanks | 4 min. at 320°F (160°C.) | None | 40 |
| Alcoa 5182 Cleaned Only | 4 min. at 350°F (177°C.) | Slight to Moderate | 0 |
| Alcoa 5182 Converted and Cleaned | 4 min. at 350°F (177°C.) | None | 0 |
| Electrically Coated Tin Plate (ETP) | 4 min. at 350°F (177°C.) | None | 0 |

(1) The vinyl resins were applied from solutions in 1/1 butyl Cellosolve/MEK mixture.

Example 13

Preparation of ammonium ionomer microemulsion

To an aqueous solution containing 65.3 g. of butyl Cellosolve, 65.3 g. of MEK, 2.33 g. of ammonium hydroxide (58%) and 258 g. of water was added 56 g. of solid Bakelite VMCA vinyl resin with agitation. The resin was converted immediately into a uniform translucent microemulsion. After standing for one day at room temperature, the microemulsion exhibited a Brookfield viscosity of 59.2 mPas (centipoise) and a pH of 8.8.

Example 14

Preparation of trimethylamine ionomer microemulsion containing epoxy resin

To a varnish composed of 2.8 g. of ERL-2774 a liquid epoxy resin derived from bisphenol A and epichlorohydrin having an epoxy equivalent of 185—200, 56 g. of Bakelite VMCA vinyl resin, 52.2 g. of ethyl Cellosolve and 78.4 g. of MEK, there was added with vigorous stirring an aqueous solution containing 3.92 g. of trimethylamine (25% solution in methanol) and 258 g. of water. The mixing was carried out in a Waring Blender for 10 minutes. A milky, uniform microemulsion was obtained. This microemulsion when applied to various substrates and dried produced a protective coating. This demonstrates a variation of the invention where a thermosetting resin can be added to the microemulsion to provide a highly crosslinked coating.

Example 15

Preparation of ammonium ionomer microemulsion

To a varnish composed of 33.6 g. of vinyl resin VMCA, 22.4 g. of Bakelite VROH vinyl resin (a terpolymer containing 80% vinyl chloride, 5% vinyl acetate and 15% hydroxypropyl acrylate copolymerized therein), 65.3 g. of butyl Cellosolve and 65.3 g. of MEK was added with vigorous stirring an aqueous solution containing 258 g. of water and 1.4 g. of a 58% ammonium hydroxide solution. A uniform, milky microemulsion was obtained. After standing at room temperature for 48 hours, the microemulsion had a Brookfield viscosity of 17.6 mPas (centipoise) and a pH of 8.45. This microemulsion when applied to various substrates and dried affords a protective coating.

Example 16

Preparation of ammonium ionomer microemulsion

To a varnish composed of 56 g. of Bakelite VMCA vinyl resin, 52.5 g. of ethyl Cellosolve, and 78.4 g. of MEK, was added with vigorous stirring, an aqueous solution containing 2.33 g. of a 58% ammonium hydroxide solution and 258 g. of water. The microemulsion obtained had a solids content of 12.5%. It was stripped under vacuum at 45°C. until the solids content reached 27.5%. A white, uniform microemulsion was obtained having a Brookfield viscosity of 24 mPas (centipoise) at 24°C. and a pH of

7. After standing at room temperature for one month there was no change in either viscosity or stability. This microemulsion when applied to various substrates and dried provided protective coatings.

Example 17

Preparation of ammonium ionomer microemulsion containing melamine

To a varnish composed of 37.33 g. of Bakelite VMCA vinyl resin, 10.67 g. of Bakelite VROH vinyl resin, 10 g. of Cymel® 301 (a melamine resin sold by American Cyanamide Co.), 65.3 g. of butyl Cellosolve and 65.3 g. of MEK was added with vigorous stirring, an aqueous solution containing 258 g. of water and 1.56 g. of a 58% ammonium hydroxide solution. A white, milky microemulsion was obtained having a Brookfield viscosity of 17.6 mPas (centipoise) and a pH of 8.35 at room temperature.

This microemulsion is also susceptible to concentration to a solids content of 29% and a Brookfield viscosity of 72 mPas (centipoise) by stripping under vacuum at 45°C., with breaking the emulsion. A 400 g. portion of the original microemulsion was condensed to 178.5 g. of microemulsion which when coated on a set of 32 mil (0.8 mm) ground steel panels and baked in air oven at 365°F. (185°C.) for 4 minutes provided glossy coatings which showed good resistance to rubbing with acetone

Example 18

Preparation of ammonium ionomer microemulsion mixed with hydrolyzed polyvinyl acetate and hexamethoxymethylmelamine

An aqueous solution containing 6 parts by weight of Gelvato® 20/30 (85% hydrolyzed polyvinyl acetate sold by Monsanto Co.), 3 parts by weight of Cymel-301 (hexamethoxymethylamine sold by Cyanamid Co.), 3 parts by weight of ammonium hydroxide (58%) and 244 parts of water was mixed thoroughly with a varnish consisting of 60 parts by weight of Bakelite VMCC vinyl resin, 30 parts by weight of Bakelite VERR vinyl resin, 118 parts by weight of MEK and 20 parts by weight of butyl Cellosolve. A high-speed, high-shear blender was used. The resultant microemulsion having a solids content of 21% was concentrated under vacuum affording a microemulsion containing solids of 40%, 55% water, 4% butyl Cellosolve and about 1% ammonium hydroxide. This microemulsion was very uniform and milky, showed Tyndall scattering, had a Brookfield viscosity at 26.5°C. of 75 mPas (centipoise) had a flow time in a No. 4 Ford cup of 15 seconds at 26.5°C., and had a pH of 7.5. The average particle size, determined by electromicroscopy, was below 0.15 microns.

These microemulsions were stable on storage at room temperature for more than 6 months. They provide protective coatings when deposited on suitable substrates and baked.

Example 19

Preparation of ammonium ionomer microemulsions mixed with hydrolyzed polyvinyl acetate and urea-formaldehyde resin

Following the procedure described in Example 18 with the exception that an equivalent weight of Beetle® 60 (normally liquid butylated urea-formaldehyde resin available from American Cyanamid Co.), was substituted for Cymel-301, a microemulsion was obtained containing total solids of 40%, 55% water, 4% butyl Cellosolve and about 1% ammonium hydroxide. This microemulsion was milky and uniform, had a pH of 7.2 and a Brookfield viscosity at 27°C. of 196 mPas (centipoise). This microemulsion provides a protective coating on substrates when deposited thereon and baked.

Example 20

Preparation of ammonium ionomer microemulsion mixed with hydrolyzed polyvinyl acetate and hexamethoxymethylmelamine

Example 18 was repeated with the exception that 1.38 parts by weight of a 17/1 mixture of MEK/butyl Cellosolve was used. The resultant microemulsion contained 41% solids, 56% water, 2% butyl Cellosolve and about 1% ammonium hydroxide. The microemulsion had a Brookfield viscosity at 28°C. of 500 mPas (centipoise) and a pH of 7.25. It provides protective coatings on substrates after baking.

Example 21

Preparation of ammonium ionomer microemulsion mixed with hydrolyzed polyvinyl acetate and hexamethoxymethylmelamine

Example 18 was repeated with the exception that 138 parts by weight of a 9/1 mixture of MEK and butyl Cellosolve was used. The resultant microemulsion contained 40% solids, 56% water, 3% butyl Cellosolve and about 1% ammonium hydroxide. Its pH was 7.4 and Brookfield viscosity 78 mPas (centipoise) at 29°C. It provides protective coatings on substrates after baking.

Example 22

Preparation of ammonium ionomer microemulsion mixed with hydrolyzed polyvinyl acetate and urea-formaldehyde resin

Example 18 was repeated with the exception that 138 parts by weight of an 18/1 weight ratio of MEK to butyl Cellosolve was used and an equivalent weight of Beetle-60 was substituted for the Cymel-301. The resultant emulsion contained 42% solids, 55% water, 2% butyl Cellosolve and about 1% ammonium hydroxide. The resultant microemulsion had a pH of 7.3 and a Brookfield viscosity of 188 (mPas) at 29°C. It provides a protective coating for substrates when deposited thereas and baked.

Example 23

Preparation of ammonium ionomer microemulsion mixed with hydrolyzed polyvinyl acetate and hexamethoxymethylmelamine

Example 18 was repeated substituting an equivalent weight of Bakelite VMCA resin for Bakelite VMCC vinyl resin. Elvanol®51-05G (86% hydrolyzed polyvinyl acetate available from DuPont), and using 138 parts of a 13/1 ratio of MEK/butyl Cellosolve. The resultant microemulsion contained 42% solids, 54% water, 3% butyl Cellosolve and about 1% ammonium hydroxide. Its pH was 7.1 and Brookfield viscosity 330 mPas (centipoise) at room temperature. This microemulsion provides a protective coating for substrates when applied and baked.

Example 24

Preparation of ammonium ionomer microemulsion mixed with hydrolyzed polyvinyl acetate and hexamethoxymethylmelamine

Example 18 was repeated with the exception that an equivalent weight of Bakelite VMCH vinyl resin (a terpolymer containing 86% vinyl chloride, 13% vinyl acetate and 1% maleic acid copolymerized therein) was substituted for Bakelite VMCC vinyl resin. The resultant microemulsion contained 40% solids, 55% water, 4% butyl Cellosolve and about 1% ammonium hydroxide. Its pH was 7.8 and Brookfield viscosity 87 mPas (centipoise) at 26°C. This microemulsion provides a protective coating when applied to substrates and baked.

Example 25

Preparation of ammonium ionomer microemulsion from solid vinyl resin

A mixture composed of 65.3 g. of each of butyl Cellosolve and MEK, 2.33 g. of ammonium hydroxide (58% in water) and 258 g. of water was thoroughly mixed in a Waring Blender. Then 56 g. of pulverized Bakelite VMCA vinyl resin was introduced into the mixture in the Waring Blender with vigorous agitation. Blending was continued for a total of 10 minutes during which time the temperature of the blend rose to 48°C. A translucent, uniform microemulsion was obtained having a Brookfield viscosity of 59 mPas (centipoise) at 25°C. and containing 12.5% total solids.

Example 26

Preparation of trimethylamine ionomer microemulsion

To a varnish composed of 28 g. of Bakelite VMCA vinyl resin, 65.3 g. of MEK and 2.8 g. of aqueous trimethyl solution (25% in water) was added with vigorous stirring, 320.3 g. of an aqueous solution containing 127.6 g. of N-methylolacrylamide. A uniform, translucent, ionomer microemulsion was obtained. This microemulsion was concentrated under vacuum at 45°C. to a vinyl resin content of 18% by weight. The resultant highly uniform microemulsion had a pH of 7.1 and a Brookfield viscosity of 16.8 mPas (centipoise) at 23.5°C.

Example 27

Preparation of 2-aminoethanol ionomer microemulsion

The procedure described in Example 1 was repeated with the exception that the 0.7725 g. of sodium hydroxide was replaced by 0.75 g. of 2-aminoethanol and the Bakelite VMCA vinyl resin was replaced with an equivalent amount of a 3.2 weight ratio mixture of Bakelite VMCA vinyl resin/Bakelite VERR vinyl resin. A uniform, milky, ionomer microemulsion was obtained having a Brookfield viscosity of 19 mPas (centipoise) at 25°C.

Example 28

Preparation of N,N-dimethylethanolamine ionomer microemulsion

To a varnish composed of 33.6 g. of Bakelite VMCA vinyl resin, 22.4 g. of Bakelite VERR vinyl resin, 97.95 g. of MEK, 24.50 g. of butyl Cellosolve and 8.17 g. of ethyl Cellosolve was added with vigorous stirring, 259.3 g. of an aqueous solution containing 1.25 g. of N,N-dimethylethanolamine. A uniform, milky, ionomer microemulsion was obtained. This was concentrated under vacuum at 45°C. yielding a uniform, microemulsion containing 30% total solids having a Brookfield viscosity of 28 mPas (centipoise) at 25°C.

Example 29

Preparation of triethylamine ionomer microemulsion

To a varnish composed of 78.36 g. of Bakelite VMCA vinyl resin 52.24 g. of Bakelite VERR vinyl resin, 32.85 g. of butyl Cellosolve and 97.75 g. of MEK, was added with vigorous stirring 261.7 g. of an aqueous solution containing 3.7 g. of triethylamine. A uniform, milky, ionomer microemulsion was obtained which was concentrated under vacuum to yield a microemulsion containing 43.7% total solids and having a Brookfield viscosity of 7.12 mPas (centipoise) at 23°C.

Example 30

Preparation of N-methyl morpholine ionomer microemulsion

To a varnish composed of 44.79 g. of Bakelite VMCA vinyl resin, 29.86 g. of Bakelite VERR vinyl resin, 97.95 g. of MEK, 24.5 g. of butyl Cellosolve, and 8.17 g. of methyl Cellosolve, was added with vigorous stirring, 259.99 g. of an aqueous solution containing 1.9 g. of N-methyl morpholine. A uniform, milky ionomer microemulsion was obtained which was concentrated under vacuum to yield a microemulsion containing 35.7% total solids and having a Brookfield viscosity of 156 mPas (centipoise) at 23°C.

Example 31

Preparation of trimethylamine ionomer microemulsion containing hydroxyl-modified epoxy resin

To a varnish composed of 87.07 g. of Bakelite VMCA vinyl resin, 32.65 g. of ethyl Cellosolve and 97.95 g. of MEK was added with vigorous stirring an aqueous solution containing 8.7 g. of trimethylamine (25% solution in water), 24 g. of LSU-494 (a water dilutable hydroxyl-modified epoxy resin having an epoxy value of 0.013 and an hydroxyl value of 0.30 equivalents/g. sold by Ciba-Geigy Co.), 5 g. of Cymel-301 and 258 g. of water. A uniform, slightly translucent ionomer-microemulsion was obtained. This microemulsion was concentrated under vacuum at 46°C. to yield a microemulsion of the following composition:

| | |
|---|---|
| Vinyl resin | 36% |
| LSU-494 | 9% |
| Cymel-301 | 2% |
| Solvents | 8% |
| Water | 45% |

The concentrated microemulsion was highly uniform with a Brookfield viscosity of 88 mPas (centipoise) at 25°C. and a pH of 6.85. After a storage period of 5 months the microemulsion was still stable. It was applied to three metallic substrates normally used for fabricating 2-piece cans, viz., Aluminum A-376 (Alcoa 5182 cleaned only), Aluminum A272 (Alcoa 5182 conversion coated and cleaned) and ETP. Application conditions used to form coatings on these substrates are presented in Table IV together with blush and adhesion test results of the resultant coatings.

TABLE IV

| SUBSTRATE | BAKE CYCLE | BLUSH | CROSS-HATCH ADHESIVE FAILURE, % |
|---|---|---|---|
| Aluminum A-376 | 4 mins. at 177°C. | None | 0% |
| | 2 min. at 196°C. | None | 0% |
| Aluminum A-272 | 4 min. at 177°C. | None | 0% |
| | 2 min. at 196°C. | None | 0% |
| ETP | 4 min. at 177°C. | None | 0% |
| | 2 min. at 196°C. | Slight | 0% |

Example 32

Preparation of trimethylamine ionomer microemulsion containing hydroxyl-modified epoxy resin

Example 31 was repeated with the exception that the 5 g. of Cymel-301 was replaced with 5 g. of Cymel-303 (a hexamethoxymethylmelamine produced by American Cyanamid Co.). A uniform slightly translucent ionomer microemulsion was obtained. This was stripped under vacuum at 46°C. to yield a microemulsion having a total solids content of 47.2% and a Brookfield viscosity of 90.4 mPas (centipoise) at 26°C.

Example 33

Preparation of trimethylamine ionomer microemulsion containing hydroxyl-modified epoxy resin

Example 32 was repeated with the exception that the 5 g. of Cymel-301 was replaced by 5 g. of Cymel-350 (a melamine resin sold by American Cyanamid Co.). A uniform, slightly translucent ionomer microemulsion was obtained. This was concentrated under vacuum at 45°C. to yield a microemulsion having a total solids content of 41.5%, a Brookfield viscosity of 39.2 mPas (centipoise) at 26.5°C. and a pH of 7.05.

Example 34

Preparation of ammonium ionomer microemulsion containing hydroxyl-modified epoxy resin

To a varnish composed of 87.07 g. of Bakelite VMCC vinyl resin (a terpolymer containing 83% vinyl chloride, 16% vinyl acetate and 1% maleic acid copolymerized therein having a number average molecular weight of 14,800), 36.65 g. of ethyl Cellosolve and 97.95 g. of MEK, was added with vigorous stirring an aqueous solution containing 3.63 g. of ammonium hydroxide (58%), 19 g. of LSU-494 epoxy resin, 3.5 g. of Beetle-60 urea resin, and 258 g. of water. A uniform, milky ionomer microemulsion was obtained. This was stripped under vacuum at 47°C. to yield a microemulsion having a total solids content of 45% and a Brookfield viscosity of 36 mPas (centipoise) at 26°C.

Example 35

Preparation of ammonium ionomer microemulsion mixed with hydrolyzed polyvinyl acetate

Example 18 was repeated with the exception that the mixed vinyl resins were replaced with 90 g. of Bakelite VMCC vinyl resin and the Cymel-301 resin was eliminated from the formulation. A uniform, milky, ionomer microemulsion was obtained. This was concentrated under vacuum to yield a microemulsion having a total solids content of 40% and Brookfield viscosity of 170 mPas (centipoise) at 24°C.

A portion of the stripped emulsion was mixed thoroughly with 31 parts of 1-butoxyethoxy-2-propanol per hundred parts of vinyl resin. The resultant microemulsion was uniform and exhibited a Brookfield viscosity of 252 mPas (centipoise) and a No. 4 Ford cup, viscosity of 27 seconds at 24°C. This microemulsion was used to coat substrates with a draw down rod. The substrates were window glass plates, 25 mil (0.625 mm) aluminum Q-panels sold by the Q-panel Co. and 10 mil (0.25 mm) cold rolled steel panels smooth finish. After drying overnight at room temperature, clear, coherent coatings were obtained on all of these substrates.

Example 36

Preparation of ammonium ionomer microemulsion mixed with hydrolyzed polyvinyl acetate

Example 35 was repeated with the exception that the Gelvatol-20/30 was replaced with Gelvatol-20/90. A uniform, milky, ionomer microemulsion was obtained. This was stripped under vacuum at 45°C. to yield a microemulsion having a total solids content of 29% and a Brookfield viscosity of 86 mPas (centipoise) at 26°C.

Example 37

Preparation of ammonium ionomer microemulsion mixed with hydrolyzed polyvinyl acetate

Example 18 was repeated with the exception that the Bakelite VMCC vinyl resin was replaced by an equal amount of Bakelite VMCA vinyl resin and the Cymel-301 was replaced by an equal amount of Beetle-60. A uniform, milky ionomer microemulsion was obtained. Upon vacuum stripping at 47°C., a microemulsion having a total solids content of 41% and Brookfield viscosity of 3064 mPas (centipoise) at 23°C. was obtained.

This microemulsion can be diluted with water without breaking down. This was demonstrated by the data shown below:

| GRAMS OF WATER ADDED TO 135 g. OF MICROEMULSION | TOTAL SOLIDS % BY WEIGHT | BROOKFIELD VISCOSITY (CENTIPOISE) mPas | OBSERVATION OF MICROEMULSION |
|---|---|---|---|
| — | 41 | 3064 | uniform |
| 23.1 | 35 | 704 | " |
| 49.5 | 30 | 232 | " |
| 86.4 | 25 | 72 | " |

Example 38

Preparation of ammonium ionomer microemulsion

To an aqueous solution containing 244 g. of water, 6 g. of Gelvatol-20/90, 3 g. of Beetle-60 and 3 g. of ammonium hydroxide (58%) was added with vigorous stirring, a varnish composed of 60 g. Bakelite VMCC vinyl resin, 30 g. of Bakelite VERR vinyl resin, 117.5 g. of MEK and 19.5 g. of butyl Cellosolve. A uniform, milky, ionomer microemulsion was obtained. This was concentrated under vacuum to yield a microemulsion having a total solids content of 40% and a Brookfield viscosity of 908 mPas (centipoise) at 24°C.

Example 39

Evaluation of ammonium ionomer microemulsion mixed with hydrolyzed polyvinyl acetate

The concentrated microemulsion prepared in Example 18 was applied on typical substrates for fabricating 2-piece cans. The performance data of the resultant can coatings in blush resistance and wet adhesion are shown in Table V.

TABLE V

| SUBSTRATE | BAKE CYCLE | BLUSH | CROSS-HATCH ADHESION FAILURE % |
|---|---|---|---|
| Continental Can Co. Budium coated tin-free steel can blank | 4 min. at 173°C. | None | 0% |
| | 4 min. at 185°C. | None | 0% |
| American Can Co. Budium coated steel can blanks | 4 min. at 173°C. | None | 0% |
| | 4 min. at 185°C. | None | 0% |
| Aluminum A-272 | 4 min. at 177°1C. | None | 0% |
| | 2 min. at 195°C. | None | 0% |
| Aluminum A-376 | 4 min. at 177°C. | None | 0% |
| | 2 min. at 195°C. | None | 0% |
| ETP | 4 min. at 177°C. | None | 0% |
| | 2 min at 195°C. | None | 0% |

Example 40

Preparation of ammonium ionomer microemulsion containing carbowax-1000

To a varnish composed of 87.87 g. of Bakelite VMCA vinyl resin, 32.65 g. of ethyl Cellosolve, and 97.95 g. of MEK, was added with vigorous stirring an aqueous solution containing 258 g. of water, 3.62 g. of ammonium hydroxide (58%) 24 g. of Carbowax polyethylene glycol-1000 (a tradename for

Union Carbide Corporation polyethylene glycol having a formula molecular weight range of 950—1050), and 5 g. of Beetle-60. A uniform, milky ionomer microemulsion was obtained. This was stripped under vacuum to yield a microemulsion having a total solids content of 45.6% and a Brookfield viscosity of 112 mPas (centipoise) at 25°C.

### Example 41

Preparation of trimethylamine ionomer microemulsion containing carbowax-1000 and cymel-301

To a varnish composed of 87.07 g. of Bakelite VMCA vinyl resin, 32.65 g. of ethyl Cellosolve and 97.95 g. of MEK was added with vigorous stirring an aqueous solution containing 258 g. of water and 8.7 g. of trimethylamine. A uniform, milky ionomer microemulsion was obtained. This was concentrated under vacuum to yield a microemulsion having a Brookfield viscosity of 176 mPas (centipoise) at 25.5°C.

One hundred grams of the above-described microemulsion was mixed with 10 g. of Carbowax-polyethylene glycol-6000 and 2 g. of Cymel-301 yielding a microemulsion having a Brookfield viscosity of 832 mPas (centipoise) at 25.5°C. This microemulsion was deposited on an aluminum A-272 panel and baked at 177°C. for 4 minutes. A clear, coherent coating was produced on the panel.

### Example 42

Preparation of trimethylamine ionomer microemulsion containing cellosize and cymel-301

The blending procedure described in Example 41 was repeated with the exception that the aqueous solution was replaced by one containing 239 grams of water, 20 g. of 5% solution of Cellosize-QP-40 in water (Cellosize is a tradename of Union Carbide Corporation, for hydroxyethylcellulose) 2 g. of Cymel-301, and 8.7 g. of a solution of trimethylamine (25% in water). A uniform, milky ionomer microemulsion was obtained. This was stripped under vacuum to yield a microemulsion having a total solids content of 36.7% and a Brookfield viscosity of 656 mPas (centipoise).

### Example 43

Preparation of trimethylamine ionomer microemulsion containing cellosize and cymel-301

Example 42 was repeated with the exception that the Cellosize QP-40 was replaced with an equal amount of QP-300. The stripped microemulsion was uniform and had a total solids content of 37% and a Brookfield viscosity of 352 mPas (centipoise) at 25°C.

### Example 44

Preparation of ammonium ionomer microemulsion containing cellosize and cymel-30

To a varnish composed of 60 g. of Bakelite VMCC vinyl resin, 30 g. of Bakelite VERR vinyl resin, 85.25 g. of MEK and 45.35 g. of butyl Cellosolve, was added with vigorous stirring an aqueous solution containing 249 g. of water, 10 g. of a 5% Cellosize QP-15,000 solution in water, 2 g. of Cymel-301, and 2.5 g. of aqueous ammonium hydroxide (58%). A uniform, milky ionomer microemulsion was obtained. This was stripped under vacuum to yield a microemulsion having a total solids content of 38% and a Brookfield viscosity of 294 mPas (centipoise) at 27°C.

### Example 45

Electrodeposition of trimethylamine ionomer microemulsion

Example 4 was repeated with the exception that only one-half of the amounts of Bakelite VMCA vinyl resin and trimethylamine was employed to make the varnish and aqueous solution respectively. A uniform, translucent ionomer microemulsion was obtained. This was concentrated under vacuum until the total solids content reached 8.5%. The pH of the microemulsion was adjusted to 7.5 by the addition of more trimethylamine. The microemulsion was then placed in a pyrex glass electrodeposition cell. Pairs of 0.064 inch (0.162 cm) diameter copper rods were employed as the electrodes which were connected to a 12 volt D.C. battery through a manual switch. With the distance between the electrodes fixed and a constant depth of immersion of the electrodes, a series of the copper rods were exposed to conditions wherein anodic electrodeposition took place. The relation between dry film thickness as a function of time of passage of current is shown in Table VI. Film thickness obtained by simply dipping the rods is also shown.

TABLE VI

| TIME IN SECONDS | COATING THICKNESS IN MILS (mm) BY ELECTRO-DEPOSITION | BY DIPPING |
|---|---|---|
| 5 | 0.75 (0.0190) | Nil |
| 10 | 1.25 (0.0317) | Nil |
| 20 | 1.75 (0.0444) | Nil |
| 30 | 2.50 (0.0635) | 0.25 (0.0063) |
| 50 | 4.0 (0.1016) | 0.50 (0.0127) |

The dried coatings obtained either at ambient temperature or by baking at elevated temperatures were coherent and glossy.

Example 46

Properties of dried coatings from ionomer microemulsion

To a varnish composed of 90 g. of Bakelite VMCC vinyl resin, 117.5 g. of MEK and 19.5 g. of butyl Cellosolve was added with vigorous stirring an aqueous solution containing 244 g. of water, 6 g. of Gelvatol-20/30, 3 g. of Cymel-301, and 2 g. of aqueous ammonium hydroxide (58%). A uniform, milky ionomer microemulsion was obtained which was concentrated under vacuum to yield a microemulsion having 39% total solids and a Brookfield viscosity of 89.6 mPas (centipoise) at 25°C. This was then thinned with 77.7 phr of butyl Cellosolve to yield a microemulsion containing 30% total solids. This microemulsion was applied with a drawdown rod onto panels of 10 mil (0.25 mm) steel type D-36 CR steel), aluminum (25 mil Q-panel) and window glass panels. The coatings were air dried to yield a 1 mil (0.025 mm) thick, clear, glossy coating on all three substrates. The following coating properties were obtained:

| COATING PROPERTY | ON Al | ON STEEL | ON GLASS |
|---|---|---|---|
| Scotch-tape adhesion, cross-hatched | PASS | PASS | PASS |
| Gardner Impact in inch/lbs. [cm/kg] (ASTM-2794-69) | | | |
| Forward | 100[1] [560] | 100[2] [560] | — |
| Reverse | 80 [448] | 100[2] [560] | — |

[1] substrate punctured
[2] substrate severely distorted

Example 47

Properties of dried coatings from ionomer microemulsions

A microemulsion prepared as in Example 46 was thinned with 31 phr of butoxyethoxy-2-propanol to yield a uniform ionomer microemulsion having a total solids of 34.6%.

This thinned microemulsion was applied with a drawdown rod onto the same three substrates as in Example 46. The coatings were air dried to yield 1 mil (0.025 mm) thick, clear, glossy coatings on all three substrates. The following coating properties were obtained.

| COATING PROPERTY | ON Al | ON STEEL | ON GLASS |
|---|---|---|---|
| Cross-hatched Scotch-tape adhesion | PASS | PASS | PASS |
| Gardner Impact in inch/lbs. [cm/kg] (ASTM 2794-69) | | | |
| Forward | 100[(1)] [560] | 100[(2)] [560] | — |
| Reverse | 80 [448] | 100[(2)] [560] | — |

(1) Substrate punctured
(2) Substrate severely distorted

The above-described microemulsion was also applied to a smooth-finished oak panel, 1/4" (6.35 mm) thick, with a draw down rod. Upon drying a coherent, glossy coating was obtained.

Example 48

Preparation of ammonium ionomer microemulsion

When a varnish composed of 65 g. of a terpolymer containing 80% vinyl chloride, 18% styrene and 2% acrylic acid and copolymerized therein, 117.5 g. of MEK, and 19.5 g. of butyl Cellosolve is added with vigorous stirring to an aqueous solution containing 244 g. of water, 6 g. of Gelvatol-20/30, 3 g. of Cymel-301 and 3 g. of aqueous ammonium hydroxide solution (58%), a uniform ionomer microemulsion is obtained.

Example 49

Preparation of ammonium ionomer microemulsion

When a varnish composed of 65 g. of a terpolymer containing 60% vinyl chloride, 39% vinylidene chloride and 1% acrylic acid copolymerized therein, 117.5 g. of MEK and 19.5 g. of butyl Cellosolve is added with vigorous stirring to an aqueous solution containing 244 g. of water, 6 g. of Gelvatol-20/30, 3 g. of Beetle-65, and 3 g. of aqueous ammonium hydroxide solution (58%), a uniform, milky ionomer microemulsion is obtained.

Example 50

Preparation of ammonium ionomer microemulsion

When a varnish composed of 65 g. of a terpolymer containing 60% vinyl chloride, 36% methyl methacrylate and 4% methacrylic acid copolymerized therein, 85 g. of MEK, and 5 g. of butyl Cellosolve is added with vigorous stirring an aqueous solution containing 244 g. of water and 5 g. of an aqueous ammonium hydroxide solution (58%), a uniform, ionomer microemulsion is obtained.

Example 51

Preparation of trimethylamine ionomer microemulsion

When a varnish composed of 65 g. of a terpolymer containing 80% vinyl chloride, 16% vinyl acetate and 4% 5-norbornene-2,3-dicarboxylic acid mono-n-butyl ester copolymerized therein, 65 g. of butyl Cellosolve, and 65 g. of MEK is added with vigorous stirring to an aqueous solution containing 258 g. of water and 8 g. of an aqueous solution of trimethylamine (25%) a uniform, ionomer microemulsion is obtained.

Example 52

Preparation of trimethylamine ionomer microemulsion

If example 51 is repeated with the exception that the vinyl resin is replaced with an equivalent amount of a terpolymer containing 80% vinyl chloride, 17% styrene and 3% p-styrenesulfonic acid copolymerized therein, a uniform ionomer microemulsion is obtained.

Example 53

Preparation of trimethylamine ionomer microemulsion

If Example 51 is repeated with the exception that the vinyl resin is replaced by an equivalent amount of a terpolymer containing 80% vinyl chloride, 18% vinyl acetate and 2% fumaric acid copolymerized therein, a uniform ionomer microemulsion is obtained.

Example 54

Stability of sodium ionomer microemulsions at varying degree of neutralization

In order to demonstrate the effect of neutralization of the basic acid containing vinyl resin on the stability of the resultant ionomer microemulsions prepared in accordance with this invention, the technique described in the previous examples was used with a vinyl terpolymer containing 43.6% vinyl chloride, 26.9% vinyl acetate and 29.5 acrylic acid copolymerized therein. A mixture of cyclohexanone, MEK and water in a ratio of 2:3:12 by weight was employed together with sufficient of the above-described terpolymer to afford a polymer concentration of 1.17%. Neutralization was effected with varying amounts of a 0.0968N sodium hydroxide solution in water. The degree of neutralization and the stability of the resultant microemulsion in minutes is delineated in Table VII.

TABLE VII

STABILITY OF MICROEMULSION VERSUS DEGREE OF NEUTRALIZATION

| DEGREE OF NEUTRALIZATION | STABILITY IN MINUTES[a] |
|---|---|
| None | 0 |
| 9.4 | 15—25 |
| 19 | " |
| 37 | 60 |
| 47 | " |
| 59 | 60 |
| 73 | 100—200 |
| 87 | " |
| 100+ | >240 |

(a) Time elapsed before phase separation of the microemulsion occurred.

Example 55

Effect of solvent-co-solvent ratios on vinyl chloride terpolymer trimethylamine microemulsions

The procedure described in Example 4 was used to prepare a trimethyl ionomer microemulsion of Bakelite VMCA vinyl resin at varying ratios of butyl Cellosolve to MEK. The total formulation consisted of 12.44% resin, 29% butyl Cellosolve plus MEK, 1.24% of a 25% methanolic solution of trimethylamine and 57.32% water. The quality of the microemulsion at varying ratios of MEK to butyl Cellosolve is demonstrated in Table VIII. Using either the solvent, MEK or the co-solvent, butyl Cellosolve alone afforded unsatisfactory results.

TABLE VIII

| MEK/BUTYL CELLOSOLVE WT. RATIO | QUALITY OF MICROEMULSION |
|---|---|
| Butyl Cellosolve only (control) | difficult to dissolve and disperse immediate resin separation |
| 0.16 (control) | translucent, fairly uniform & stable |
| 0.20 | " |
| 0.25 | translucent, uniform & stable |
| 0.50 | " |
| 1.0 | " |
| 1.36 | " |
| 1.50 | " |
| 1.60 | " |
| 1.88 | very slightly translucent, uniform & stable |
| 2.0 | milky, uniform and stable |
| 2.3 | milky, uniform and less stable |
| 3.0 | " |
| 4.3 | " |
| MEK only (control) | immediate resin separation |

## Claims

1. Method of preparing aqueous microemulsions of vinyl resins being copolymers of vinyl chloride and/or vinylidene chloride and having carboxylic or sulfonic groups therein which comprises vigorously blending said resins with a water-miscible base, water, at least one organic water-miscible solvent which has an affinity for said resins and a boiling point below 160°C, an organic and a water-miscible co-solvent which is a poor solvent for said resins but is miscible with the organic solvents and has a boiling point above that of the organic solvents and water.

2. Method as claimed in claim 1 of preparing aqueous microemulsions of vinyl resins which comprises blending:

(A) a normally solid vinyl resin containing carboxylic or sulfonic acid groups and having the following moieties copolymerized therein

(1) 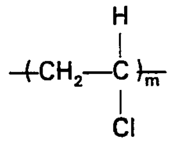

(2) 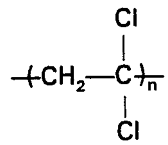

(3) 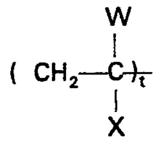

(4) 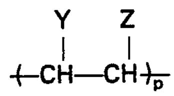

(5) 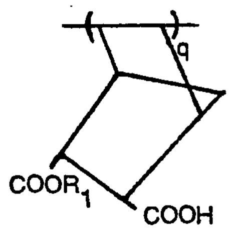

wherein m and n are percentages each having a value of 0—99%;

t is a percentage having a value of 0—59%;

p is a percentage having a value of 1—30%, when q = 0;

q is a percentage having a value of 1—30%; when p = 0; with the proviso that m+n+t is ≥ 70 and ≤ 99%, that m+n+t+p+q = 100%, that when m = 0, n is at least 1 and that when n = 0, m is at least 1; wherein X is a monovalent radical selected from —H and lower alkyls having 1—4 carbons;

W is a monovalent radical selected from —H, lower alkyls, aryl having 6 to 9 carbons,

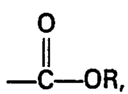, 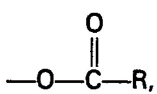, 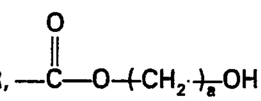

wherein a is an integer having values of 1—3,

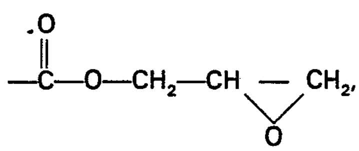, —OR

wherein R is a $C_1$—$C_{18}$-alkyl, —OH,

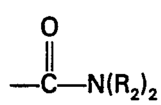

wherein $R_2$ is a monovalent radical selected from —H, methyl or ethyl, and —CN;

Y is a monovalent radical selected from —H, methyl,

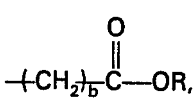 or

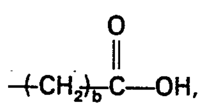

wherein b is an integer having values of 0—4;

and R is a $C_1$—$C_{18}$-alkyl, —OH,

$$-\overset{O}{\overset{\|}{C}}-N(R_2)_2$$

wherein $R_2$ is monovalent radical selected from —H, methyl or ethyl;
Z is a monovalent radical selected from

$$-(CH_2)_b-\overset{O}{\overset{\|}{C}}-OH,\ -SO_3H \text{ and } -C_6H_4-SO_3H; \text{ and}$$

$R_1$ is a monovalent radical selected from —H, methyl or ethyl; with the proviso that Y and Z are never —COOH and —$SO_3H$ at the same time,

(B) sufficient water-miscible base to neutralize 10% to 100% of said carboxylic or sulfonic acid groups,

(C) 1 to 200 parts, per 100 parts by weight of vinyl resin of a water-miscible normally liquid solvent for said vinyl resin having a boiling point of up to 160°C, selected from lower aliphatic ketones, esters or ethers having 3 to 6 carbon atoms and cycloaliphatic ketones or ethers having 4 to 6 carbon atoms;

(D) 1 to 200 parts, per 100 parts by weight of vinyl resin, or a normally liquid co-solvent which is miscible with water and solvent (C), having a boiling point greater than that of solvent (C) and water, selected from

(1) glycol monoalkyl ethers having the formula:

$$HO-(CHR''CHR'''O)_r-R''''$$

where each of R'', R''' is H or $CH_3$, r is an integer having values of 1 to 3 and R'''' is an alkyl group having 1 to 6 carbon atoms;

(2) aliphatic acidic ethers having the formula:

$$R'''''O-(CH_2)_r-COOH$$

wherein R''''' is an alkyl group having 1 to 4 carbon atoms and r has the meaning stated above;

(3) amino esters having the formula:

$$R''''-\overset{O}{\overset{\|}{C}}-O-(CH_2)_r-NH_2,$$

R''''' and r having the meaning stated above;

(4) amino ketones having the formula:

$$R'''''-\overset{O}{\overset{\|}{C}}-(CH_2)_r-NH_2,$$

R''''' and r having the meaning stated above;

(5) aliphatic alcohols having the formula:
$R_2OH$, whee $R_2$ is alkyl having 1 to 5 carbons;

(6) aliphatic carboxylic acids having the formula:

$$R_3\overset{O}{\overset{\|}{C}}OH,$$

where $R_3$ is H or alkyl having 1 to 4 carbons;

(7) aliphatic amines having the formula:

$$R_4-\underset{R_6}{\underset{|}{N}}-R_5$$

where $R_4$ and $R_5$ are H or alkyl having 1 to 6 carbons and $R_6$ is alkyl having 1 to 6 carbons, with the proviso that the total number of carbons in the sum of $R_4 + R_5 + R_6 \leq 6$;

(8) aliphatic amino ethers having the formula:

$$-[R_7O-(CH_2)_g]_r-NH_{3-r}$$

where $R_7$ is methyl or ethyl, g has values of 1—4 and r has the meaning stated above;

(9) aliphatic dialkyl amides having the formula:

$$R_8CON(R_7)_2$$

where $R_8$ is H or alkyl having 1 to 5 carbons, and $R_7$ has the meaning stated above;

(10) N-(Hydroxymethyl)acrylamide and N-(hydroxymethyl)methacrylamide

(11) cycloaliphatic ether alcohols having the formula:

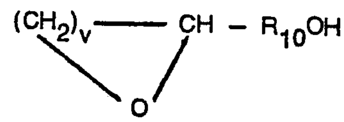

where $R_{10}$ is alkylene having 1 to 3 carbons and v is an integer having values of 1 to 5;

(12) hydroxy esters having the formula:

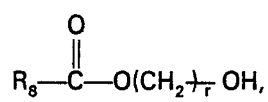

$R_8$ and r have the meaning stated above; and

(13) hydroxy ketones having the formula:

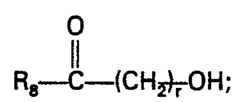

$R_8$ and r have the meaning stated above; and

(E) sufficient water to provide an aqueous microemulsion having a total solids content of up to 60% by weight.

3. Method claimed in claim 2 wherein the vinyl resin contains 60 to 91 weight % vinyl chloride, 10 to 25 weight % vinyl acetate and 1 to 15% carboxyl-containing ethylenically unsaturated hydrocarbon, preferably maleic acid, fumaric acid or crotonic acid.

4. Method claimed in claim 2 wherein the vinyl resin contains 75 to 99 weight % vinyl chloride and 1 to 25% acrylic or methacrylic acid copolymerized therein.

5. Method claimed in claim 2 wherein a mixture of a vinyl chloride/vinyl acetate/maleic acid terpolymer and a vinyl chloride/vinyl acetate/glycidyl acrylate or methacrylate terpolymer or a vinyl chloride/vinyl acetate/hydroxyalkyl acrylate or methacrylate terpolymer having 2 to 3 carbons in the alkyl group or a vinyl chloride/vinyl acetate/vinyl alcohol terpolymer is used.

6. Method claimed in claim 2 wherein the vinyl resin is a terpolymer of vinyl chloride, vinylidene chloride and an ethylenically unsaturated carboxylic acid, preferably maleic acid or fumaric acid, or acrylic or methacrylic acid.

7. Method claimed in claim 2 wherein the vinyl resin is a copolymer of vinyl chloride and an ethylenically unsaturated carboxylic acid, preferably acrylic or methacrylic acid.

8. Method claimed in claim 2 wherein the vinyl resin is a copolymer of vinylidene chloride and an ethylenically unsaturated carboxylic acid.

9. Method claimed in claims 2—8 wherein the vinyl resin (A) is first dissolved in the solvent (C) and co-solvent (D), contacted with base (B) and then emulsified with water.

10. Method claimed in claim 2—8 wherein the vinyl resin (A) is pulverized and added to a mixture of base (B), solvent (C), co-solvent (D) and water with vigorous agitation.

11. Method claimed in claims 2—10 wherein a crosslinking amount of a thermosetting resin is blended into the microemulsion.

12. Method claimed in claims 2—11 wherein the thermosetting resin is an epoxy resin, a hexamethoxy-methylmelamine or a methylated urea-formaldehyde resin.

**Patentansprüche**

1. Verfahren zur Herstellung wässriger Mikroemulsionen von Vinylharzen, welche Mischpolymere aus Vinylchlorid und/oder Vinylidenchlorid mit darin enthaltenen Carboxyl- oder Sulfo-gruppen sind, welches heftiges Mischen der Harze mit einer mit Wasser mischbaren Base, Wasser, wenigstens einem organischen, mit Wasser mischbaren Lösungsmittel, das eine Affinität gegenüber den Harzen besitzt und einen Siedepunkt von weniger als 160°C hat, und einem organischen und mit Wasser mischbaren Co-Lösungsmittel, das für die genannten Harze ein schlechtes Lösungsmittel, jedoch mit dem organischen Lösungsmittel mischbar ist und einen Siedepunkt über jenen der organischen Lösungsmittel und Wasser besitzt umfaßt.

2. Verfahren nach Anspruch 1, zur Herstellung wässriger Mikroemulsionen von Vinylharzen, welches ein Vermischen von:

A) einem normalerweise festen Vinylharz, das Carboxyl- oder Sulfosäure-gruppen enthält und die folgenden, darin mischpolymerisierten Einheiten aufweist

(1) 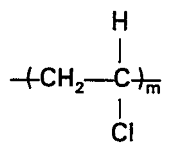

(2) 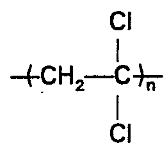

(3) 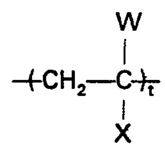

(4) 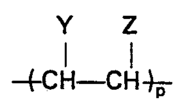

(5) 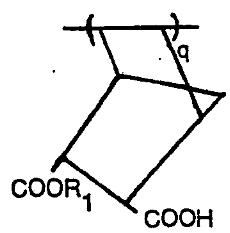

worin m und n jeweils prozentuale Werte von 0—99% sind;

t ein prozentualer Wert von 0—59% ist;

p ein prozentualer Wert von 1—30% ist, wenn q für 0 steht

q ein prozentualer Wert von 1—30% ist, wenn p für 0 steht; unter der Voraussetzung, daß m+n+t $\geq 70$ und $\leq 99\%$ ist, daß m+n+t+p+q = 100% ist, daß n wenigstens 1 ist, wenn m für 0 steht, und daß m wenigstens 1 ist, wenn n für 0 steht,

wobei X eine einwertige Gruppe ausgewählt von —H und Niederalkylen mit 1—4 Kohlenstoffatomen;

W eine einwertige Gruppe ausgewählt von —H, Niederalkylen, Aryl mit 6—9 Kohlenstoffatomen,

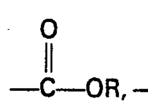 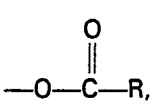 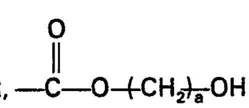

worin a eine ganze Zahl von 1—3 bedeutet,

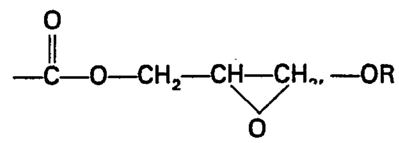

worin R ein $C_1$—$C_{18}$-Alkyl, —OH,

$$-\overset{O}{\overset{\|}{C}}-N(R_2)_2$$

bedeutet, wobei $R_2$ eine einwertige Gruppe ausgewählt von —H, Methyl oder Äthyl bedeutet, und —CN ist;

Y eine einwertige Gruppe ausgewählt von —H, Methyl,

$$-(CH_2)_b-\overset{O}{\overset{\|}{C}}-OR, \quad \text{oder}$$

$$-(CH_2)_b-\overset{O}{\overset{\|}{C}}-OH \text{ ist,}$$

worin b eine ganze Zahl von 1 bis 4 bedeutet und R ein $C_1$—$C_{18}$Alkyl, —OH,

$$-\overset{O}{\overset{\|}{C}}-N(R_2)_2 \text{ ist,}$$

wobei $R_2$ eine einwertige Gruppe ausgewählt von —H, Methyl oder Äthyl bedeutet;

Z eine einwertige Gruppe ausgewählt von

$$-(CH_2)_b-\overset{O}{\overset{\|}{C}}-OH,$$

—$SO_3H$ und —$C_6H_4$—$SO_3H$ bedeutet; und

$R_1$ eine einwertige Gruppe ausgewählt von —H, Methyl oder Äthyl ist; unter der Voraussetzung, daß Y und Z nicht gleichzeitig —COOH und —$SO_3H$ sind,

(B) einer ausreichenden Menge mit Wasser mischbarer Base zur Neutralisierung von 10%—100% der Carbon- oder Sulfonsäuregruppen,

(C) 1 bis 200 Teilen, pro 100 Gewichtsteile Vinylharz, an mit Wasser mischbarem, normalerweise flüssigem Lösungsmittel für dieses Vinylharz mit einem Siedepunkt bis zu 160°C, ausgewählt von niederen aliphatischen Ketonen, Estern oder Äthern mit 3—6 Kohlenstoffatomen und cycloaliphatischen Ketonen oder Äthern mit 4—6 Kohlenstoffatomen,

(D) 1 bis 200 Teilen, pro 100 Gewichtsteile Vinylharz, eines normalerweise flüssigen Co-Lösungsmittels, welches mit Wasser und dem Lösungsmittel (C) mischbar ist und einen Siedepunkt hat, der höher als jener des Lösungsmittels (C) und Wasser ist, ausgewählt von

(1) Glykolmonoalkyläthern der Formel:

$$HO-(CHR''CHR''O)_r-R''''$$

worin R'', R''' jeweils H oder $CH_3$, r eine ganze Zahl von 1—3 und R'''' eine Alkylgruppe mit 1—6 Kohlenstoffatomen ist;

(2) aliphatischen Säureäthern der Formel:

$$R'''''O-(CH_2)_r-COOH$$

worin R'''' eine Alkylgruppe mit 1—4 Kohlenstoffatomen ist und r die oben definierte Bedeutung hat;

(3) Aminoestern der Formel:

$$R'''''-\overset{O}{\overset{\|}{C}}-O-(CH_2)_r-NH_2,$$

worin R''''' und r die oben definierte Bedeutung haben;

(4) Aminoketonen der Formel:

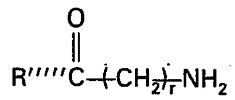

worin R''''' und r die oben definierte Bedeutung haben;

(5) aliphatischen Alkoholen der Formel:

$R_2OH$, worin $R_2$=Alkyl mit 1—5 Kohlenstoffatomen ist;

(6) aliphatischen Carbonsäuren der Formel:

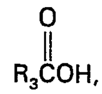

worin $R_3$=H oder Alkyl mit 1—4 Kohlenstoffatomen ist;

(7) aliphatischen Aminen der Formel:

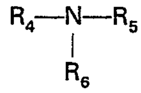

worin $R_4$ und $R_5$=H oder Alkyl mit 1—6 Kohlenstoffatomen sind und $R_6$=Alkyl mit 1—6 Kohlenstoffatomen ist, unter der Voraussetzung, daß die Gesamtzahl der Kohlenstoffatome in der Summe von $R_4+R_5+R_6 \leq 6$ ist;

(8) aliphatischen Aminoäthern der Formel:

$$-[R_7O-(CH_2)_g]_r NH_{3-r}$$

worin $R_7$=Methyl oder Äthyl ist, g einen Wert von 1—4 besitzt und r die oben definierte Bedeutung hat;

(9) aliphatischen Dialkylamiden der Formel:

$$R_8CON(R_7)_2$$

worin $R_8$=H oder Alkyl mit 1—5 Kohlenstoffatomen ist und $R_7$ die oben definierte Bedeutung hat;

(10) N-(Hydroxymethyl)acrylamid und N-(Hydroxymethyl)methacrylamid

(11) cycloaliphatischen Äther-Alkoholen der Formel:

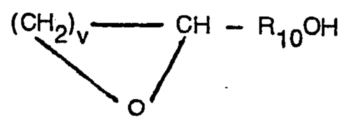

worin $R_{10}$=Alkylen mit 1—3 Kohlenstoffatomen istund V eine ganze Zahl von 1—5 bedeutet;

(12) Hydroxyestern der Formel:

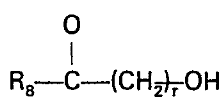

worin $R_8$ und r die oben definierte Bedeutung haben bzw.

(13) Hydroxyketonen der Formel:

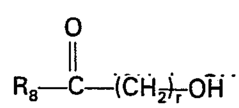

worin $R_8$ und r die oben definierte Bedeutung haben, und

(E) eine Wassermenge, die ausreicht, um eine wässrige Mikroemulsion mit einem Gesamtfeststoffgehalt von bis zu 60 Gew.-% zu schaffen, umfaßt.

3. Verfahren nach Anspruch 2, worin das Vinylharz 60—91 Gew.-% Vinylchlorid, 10—25 Gew.-%

Vinylacetat und 1—15% Carboxyl-haltigen äthylenisch ungesättigen Kohlenwasserstoff, vorzugsweise Maleinsäure, Fumarsäure oder Crotonsäure enthält.

4. Verfahren nach Anspruch 2, worin das Vinylharz 75—99 Gew.-% Vinylchlorid und 1—25% darin mischpolymerisierte Acryl- oder Methacrylsäure enthält.

5. Verfahren nach Anspruch 2, worin eine Mischung eines Vinylchlorid/Vinylacetat/Maleinsäure-Terpolymers und eines Vinylchlorid/Vinylacetat/Glycidylacrylat- oder -methacrylat-Terpolymers eines Vinylchlorid/Vinylacetat/Hydroxyalkylacrylat- oder -methacrylat-Terpolymers mit 2—3 Kohlenstoffatomen in der Alkylgruppe oder eines Vinylchlorid/Vinylacetat/Vinylalkohol-Terpolymers verwendet wird.

6. Verfahren nach Anspruch 2, worin das Vinylharz ein Terpolymer aus Vinylchlorid, Vinylidenchlorid und einer äthylenisch ungesättigten Carbonsäure, vorzugsweise Maleinsäure, Fumarsäure oder Acryl- oder Methacrylsäure ist.

7. Verfahren nach Anspruch 2, worin das Vinylharz ein Mischpolymer aus Vinylchlorid und einer äthylenisch ungesättigten Carbonsäure, vorzugsweise Acryl- oder Methacrylsäure ist.

8. Verfahren nach Anspruch 2, worin das Vinylharz ein Mischpolymer aus Vinylidenchlorid und einer äthylenisch ungesättigten Carbonsäure ist.

9. Verfahren nach Anspruch 2—8, worin das Vinylharz (A) zuerst in dem Lösungsmittel (C) und dem Co-Lösungsmittel (D) gelöst, mit der Base (B) in Kontakt gebracht und dann mit Wasser emulgiert wird.

10. Verfahren nach Anspruch 2—8, worin das Vinylharz (A) pulverisiert und einer Mischung aus der Base (B), Lösungsmittel (C), Co-Lösungsmittel (D) und Wasser unter heftigem Rühren zugegeben wird.

11. Verfahren nach Anspruch 2—10, worin eine vernetzende Menge eines hitzehärtbaren Harzes mit der Mikroemulsion vermischt wird.

12. Verfahren nach Anspruch 2—11, worin das hitzehärtbare Harz ein Epoxyharz, ein Hexamethoxymethylmelaminharz oder ein methyliertes Harnstoff-Formaldehydharz ist.

**Revendications**

1. Procédé de préparation de micro-émulsions aqueuses de résines vinyliques qui sont des copolymères de chlorure de vinyle et/ou de chlorure de vinylidène et qui portent des groupes carboxyliques ou sulfoniques, qui consiste à agiter énergiquement lesdites résines avec une base miscible à l'eau, de l'eau, au moins un solvant organique miscible à l'eau qui est doué d'affinité pour lesdites résines et qui a un point d'ébullition inférieur à 160°C, un co-solvant organique et miscible à l'eau qui est un solvant médiocre pour lesdites résines mais qui est miscible aux solvants organiques et qui a un point d'ébullition supérieur à celui des solvants organiques et de l'eau.

2. Procédé suivant la revendication 1 pour la préparation de micro-émulsions aqueuses de résines vinyliques, qui consiste à mélanger:

(A) une résine vinylique normalement solide contenant des groupes acides carboxylique ou sulfonique et renfermant les groupements suivants incorporés par copolymérisation:

(1) 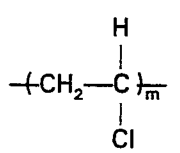

(2) 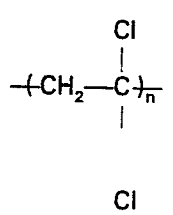

(3) 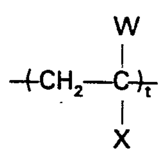

(4) 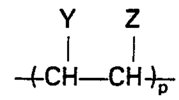

(5) 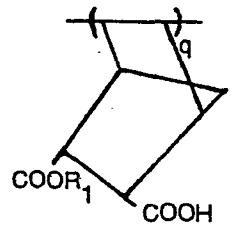

où m et n sont des pourcentages ayant chacun une valeur de 0 à 99%;

t est un pourcentage ayant une valeur de 0 à 59%;

p est un pourcentage ayant une valeur de 1 à 30%, lorsque q = 0;

q est un pourcentage ayant une valeur de 1—30%, lorsque p = 0; à condition que la somme m+n+t soit ≥ 70 et ≤ 99%, que la somme m+n+t+p+q soit égale à 100%, que lorsque m est égal à 0, n soit au moins égal à 1 et que lorsque n est égal à 0, m soit au moins égal à 1; X est un radical monovalent choisi entre —H et des groupes alkyle inférieurs ayant 1 à 4 atomes de carbone;

W est un radical monovalent choisi entre —H, des radicaux alkyle inférieurs, des radicaux aryle ayant 6 à 9 atomes de carbone,

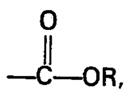, 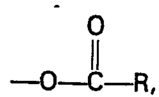, 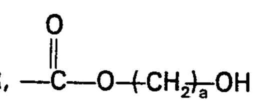

où a est un nombre entier ayant des valeurs de 1—3,

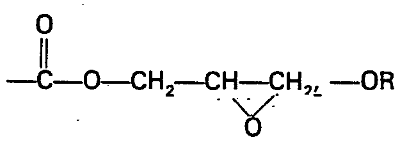

où R est un radical alkyle en $C_1$ à $C_{18}$, un radical —OH, un radical

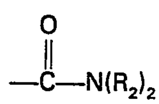

où $R_2$ est un radical monovalent choisi entre —H, méthyle ou éthyle et —CN;

Y est un radical monovalent choisi entre —H, méthyle,

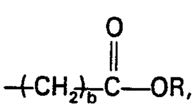, ou

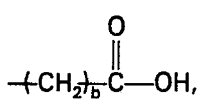,

où b est un nombre entier ayant des valeurs de 0—4;
et R est un groupe alkyle en $C_1$ à $C_{18}$, —OH,

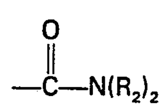

où $R_2$ est un radical monovalent choisi entre —H, méthyl ou éthyle;

Z est un radical monovalent choisi entre

$$-(CH_2)_b-\overset{\overset{\displaystyle O}{\|}}{C}-OH,\ -SO_3H \text{ et } -C_6H_4-SO_3H;\text{ et}$$

$R_1$ est un radical monovalent choisi entre —H, méthyle ou éthyle; à condition que Y et Z ne représentent jamais —COOH et —$SO_3H$ en même temps,

(B) une quantité suffisante d'une base miscible à l'eau pour neutraliser 10% à 100% desdits groupes acide carboxylique ou sulfonique,

(C) 1 à 200 parties, pour 100 parties en poids de résine vinylique, d'un solvent normalement liquide miscible à l'eau pour ladite résine vinylique, de point d'ébullition s'élevant jusqu'à 160°C, choisi entre des cétones, des esters ou des éthers aliphatiques inférieurs ayant 3 à 6 atomes de carbone et des cétones ou éthers cycloaliphatiques ayant 4 à 6 atomes de carbone;

(D) 1 à 200 parties, pour 100 parties en poids de résine vinylique, d'un co-solvant normalement liquide qui est miscible à l'eau et au solvant (C), de point d'ebullition ne dépassant pas celui du solvant (C) et de l'eau, choisi entre

(1) des éthers monoalkyliques de glycol de formule:

$$(HO-(CHR''CHR'''O)_r-R''''$$

dans laquelle chacune des variables R'', R''' représente H ou $CH_3$, r est un nombre entier ayant des valeurs de 1 à 3 et R'''' est un groupe alkyle ayant 1 à 6 atomes de carbone;

(2) des éthers acides aliphatiques de formule:

$$R'''''O-(CH_2)_r-COOH$$

dans laquelle R''''' est un groupe alkyle ayant 1 à 4 atomes de carbone et r a la définition donnée ci-dessus:

(3) des aminoesters de formule:

$$R'''''-\overset{\overset{\displaystyle O}{\|}}{C}-O-(CH_2)_r-NH_2,$$

où R''''' et r ont les définitions données ci-dessus;

(4) des aminocétones de formule:

$$R''''-\overset{\overset{\displaystyle O}{\|}}{C}-(CH_2)_r-NH_2,$$

dans laquelle R''''' et r ont la définition donnée ci-dessus;

(5) des alcools aliphatiques de formule:

$$R_2OH$$

dans laquelle $R_2$ est un radical alkyle ayant 1 à 5 atomes de carbone;

(6) des acides carboxyliques aliphatiques de formule:

$$R_3\overset{\overset{\displaystyle O}{\|}}{C}OH$$

dans laquelle $R_3$ représente H ou un radical alkyle ayant 1 à 4 atomes de carbone;

(7) des amines aliphatiques de formule:

$$R_4-\underset{\underset{\displaystyle R_6}{|}}{N}-R_5$$

dans laquelle $R_4$ et $R_5$ représentent H ou un radical alkyle ayant 1 à 6 atomes de carbone et $R_6$ est un radical alkyle ayant 1 à 6 atomes de carbone, à condition que le nombre total d'atomes de carbone dans la somme $R_4 + R_5 + R_6 \leq 6$;

(8) des aminoéthers aliphatiques de formule:

$$-[R_7O-(CH_2)_g]_r NH_{3-r}$$

dans laquelle $R_7$ est un radical méthyle ou éthyle, g a des valeurs de 1 à 4 et r a la définition donnée ci-dessus;

(9) des dialkylami es aliphatiques de formule:

$$R_8CON(R_7)_2$$

dans laquelle $R_8$ représente H ou un radical alkyle ayant 1 à 5 atomes de carbone, et $R_7$ a la définition donnée ci-dessus;

(10) le N-(hydroxyméthyl)acrylamide et le N-(hydroxyméthyl)méthacrylamide

(11) des éther-alcools cycloaliphatiques de formule:

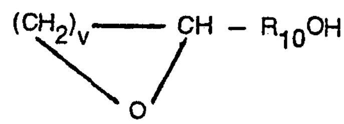

dans laquelle $R_{10}$ est un radical alkylène ayant 1 à 3 atomes de carbone et v est un nombre entier ayant des valeurs de 1 à 5;

(12) des hydroxyesters de formule:

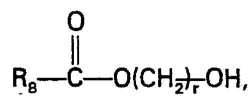

où $R_8$ et r ont les définitions données ci-dessus; et

(13) des hydroxycétones de formule:

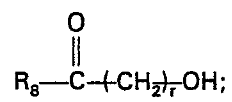

dans laquelle $R_8$ et r ont les définitions données ci-dessus; et

(E) une quantité suffisante d'eau pour obtenir une micro-émulsion aqueuse dont la teneur en matières solides totale va jusqu'à 60% en poids.

3. Procédé suivant la revendication 2, dans lequel la résine vinylique contient 60 à 91% en poids de chlorure de vinyle, 10 à 25% en poids d'acétate de vinyle et 1 à 15% d'hydrocarbure à non-saturation éthylénique contenant le groupe carboxyle, de préférence l'acide maléique, l'acide fumarique ou l'acide crotonique.

4. Procédé suivant la revendication 2, dans lequel la résine vinylique contient 75 à 99% en poids de chlorure de vinyle et 1 à 25% d'acide acrylique ou méthacrylique incorporé par copolymérisation.

5. Procédé suivant la revendication 2, dans lequel on utilise un mélange d'un terpolymère chlorure de vinyle/acétate de vinyle/acide maléique et d'un terpolymère chlorure de vinyle/acétate de vinyle/acrylate ou méthacrylate de glycidyle ou d'un terpolymère chlorure de vinyle/acétate de vinyle/acrylate ou méthacrylate d'hydroxyalkyle ayant 2 ou 3 atomes de carbone dans le groupe alkyle ou d'un terpolymère chlorure de vinyle/acétate de vinyle/alcool vinylique.

6. Procédé suivant la revendication 2, dans lequel la résine vinylique est un terpolymère de chlorure de vinyle, de chlorure de vinylidène et d'un acide carboxylique à non-saturation éthylénique, de préférence l'acide maléique ou l'acide fumarique, ou l'acide acrylique ou méthacrylique.

7. Procédé suivant la revendication 2, dans lequel la résine vinylique est un copolymère de chlorure de vinyle et d'un acide carboxylique à non-saturation éthylénique, de préférence l'acide acrylique ou l'acide méthacrylique.

8. Procédé suivant la revendication 2, dans lequel la résine vinylique est un copolymère de chlorure de vinylidène et d'un acide carboxylique à non-saturation éthylénique.

9. Procédé suivant les revendications 2 à 8, dans lequel la résine vinylique (A) est tout d'abord dissoute dans le solvant (C) et le co-solvant (D), mise en contact avec la base (B) puis émulsionnée avec de l'eau.

10. Procédé suivant les revendications 2 à 8, dans lequel la résine vinylique (A) est pulvérisée et ajoutée à un mélange de base (B), de solvant (C), de co-solvant (D) et d'eau sous agitation énergique.

11. Procédé suivant les revendications 2 à 10, dans lequel une quantité réticulante d'une résine thermodurcissable est incorporée à la micro-émulsion.

12. Procédé suivant les revendications 2 à 11, dans lequel la résine thermodurcissable est une résine époxy, une résine hexaméthoxyméthylmélamine ou une résine urée-formaldéhyde méthylée.